# EUROPÄISCHE PATENTSCHRIFT

(11) **EP 4 129 575 B1**
(45) Veröffentlichungstag und Bekanntmachung des Hinweises auf die Patenterteilung: **27.09.2023**
(21) Anmeldenummer: 21190206.9
(22) Anmeldetag: 06.08.2021
(51) Int. Cl.: B25B 27/00, B23P 19/08, B25J 15/00

(54) **RING-MONTAGEVORRICHTUNG SOWIE VERFAHREN ZUM EINSTELLEN EINER RING-MONTAGEVORRICHTUNG**
RING MOUNTING APPARATUS AND METHOD OF ADJUSTING A RING MOUNTING APPARATUS
DISPOSITIF DE MONTAGE D'ANNEAU, AINSI QUE PROCÉDÉ DE RÉGLAGE D'UN DISPOSITIF DE MONTAGE D'ANNEAU

(43) Veröffentlichungstag der Anmeldung: 08.02.2023
(73) Patentinhaber: Ohrmann GmbH, 59519 Möhnesee (DE)
(72) Erfinder: VOLLMER, Michael, 59519 Möhnesee (DE)
(74) Vertreter: Prinz & Partner mbB

(56) Entgegenhaltungen:
- EP-A1- 1 110 665
- DE-A1-102006 044 748
- DE-A1-102017 123 162
- JP-A- H0 463 691
- JP-A- 2011 056 595

## Beschreibung

Die Erfindung betrifft eine Ring-Montagevorrichtung zum Aufbringen eines elastischen, geschlossen umlaufenden Rings, insbesondere eines Dichtrings, auf einen Außenmantel eines Bauteils, mit wenigstens zwei aufeinander zu und voneinander weg schwenkbaren Greiferarmen, wobei auf jedem Greiferarm ein Finger angebracht ist, und die Finger in eine vom Ring umschlossene Fläche eindringen können und durch das Schwenken der Greiferarme voneinander weg und nach außen beweglich sind, um den Ring zu spannen.

Darüber hinaus betrifft die Erfindung ein Verfahren zum Einstellen einer Ring-Montagevorrichtung auf geschlossen umlaufende Ringe von unterschiedlichen Querschnitten, wobei die Ring-Montagevorrichtung mehrere aufeinander zu und voneinander weg schwenkbare Greiferarme und auf jedem Greiferarm einen dort angebrachten Finger aufweist, wobei zwischen den Fingern der zu montierende Ring gespannt werden kann.

Zur Montage eines elastischen Rings, insbesondere eines Dichtrings, auf der Außenseite eines Körpers, insbesondere eines kreiszylindrischen Körpers, ist es erforderlich, den elastischen Ring während des Montageprozesses zu weiten.

Im Stand der Technik gibt es verschiedene Ansätze und Ideen, um einen elastischen Ring auf einem Körper zu montieren. In die Praxis haben diese Ansätze und Ideen nur zum Teil Einzug erhalten.

Eine gattungsgemäße Vorrichtung und ein gattungsgemäßes Verfahren sind aus der EP 1 110 665 A1 bekannt.

Eine Möglichkeit ist die Verwendung von entsprechend dimensionierten Fügehülsen. Eine Fügehülse ist ein Zwischenbauteil, welches als Montagehilfe genutzt wird und von dem aus der elastische Ring auf das endgültige Bauteil montiert wird. Hierbei erfolgt zunächst ein Aufschieben des elastischen Rings auf das rückseitige, verdünnte Ende der Fügehülse, wodurch der elastische Ring gedehnt wird. Anschließend wird der elastische Ring von der Fügehülse auf das endgültige Bauteil in die Montageposition geschoben. Das Bauteil wird dabei typischerweise in die stirnseitige Öffnung der Fügehülse eingesteckt. Die dabei nötige Schiebbewegung entlang des rückseitigen, verdünnten Endes der Fügehülse, welches für gewöhnlich kegelförmig ausgebildet ist, kann zu einer Abrollbewegung und damit zu einer Verdrehung des elastischen Rings führen. Dies hat häufig eine fehlerhafte Funktion des elastischen Rings zur Folge, da der Ring nach dem Verdrehen nicht torsionsfrei auf dem Körper aufgebracht wird.

Eine weitere Möglichkeit zur Montage von elastischen Ringen ist der sogenannte Mehrfingergreifer. Hierbei wird der elastische Dichtring in der Regel von sechs innenliegenden Fingern aufgenommen und anschließend aufgeweitet, indem sich die Finger nach radial außen bewegen. Der aufgeweitete elastische Ring wird anschließend direkt oder indirekt über eine Fügehülse auf das Bauteil aufgebracht. Diese Einheiten sind häufig verhältnismäßig schwer und benötigt viel Platz.

Ferner bietet sich die am Markt etablierte Montagetechnik mittels Nadeln an. Hierbei erfolgt eine Aufweitung und Montage des Dichtrings durch ein aufspreizbares Nadelpaar. Bei dieser Montagetechnik können elastische Ringe nur im Bereich nahe der Bauteilenden montiert werden. Schwerer zu erreichende Montagestellen können nicht erreicht werden. Außerdem kann es durch Verschleiß und ungünstigen Auftreffwinkel zu einem örtlich falschen oder kräftemäßig zu starken Kontakt des Aufnehmer- oder Bauteilendes mit den Nadeln kommen. Die Nadeln können dadurch verformt werden, wodurch die Funktion der Montagevorrichtung beeinträchtigt werden kann und elastische Ringe durch die verbogenen Nadelenden beim Zurückfahren der Nadeln wieder von dem Aufnehmer- oder Bauteilende gezogen werden. Damit das Bauteil, egal ob es sich um das endgültige Bauteil handelt oder um die Fügehülse, in die vom Ring umschlossene, ebene Fläche eindringen kann, muss diese Fläche schräg zum Bauteil gestellt werden, sodass eine Hälfte unterhalb des stirnseitigen Endes des Bauteils liegt und die andere Hälfte darüber. In diesem Zustand kann dann eine Relativbewegung zwischen dem gekippten Ring und dem Bauteil vorgenommen werden, sodass die untere Hälfte des Rings seitlich am Bauteil zu liegen kommt und das Bauteil dann zwischen die Finger bewegt wird und damit zunehmend vom Ring umschlossen wird. Üblicherweise ist der Ring im gekippten Zustand stationär, und das Bauteil wird längs einer Bahnkurve, üblicherweise einer Kreiskurve auf den Ring zu und dann zwischen die Finger geschwenkt. Am Ende der Schwenkbewegung sitzt dann der Ring in gleichmäßigem Abstand vom stirnseitigen Ende des Bauteils auf dessen Außenmantel.

Bislang waren für die Anpassung der Ring-Montagevorrichtung auf andere Ringquerschnitte aufwendige Umbauarbeiten notwendig. Darüber hinaus waren teilweise andere Greiferarme und andere Finger vorgesehen, sodass im Montagebetrieb eine hohe Anzahl von Teilen vorhanden sein musste, um die Ring-Montagevorrichtung umzubauen. Ein solcher Umbau kostet immer erheblich Rüstzeit, zumal die Greiferarme und ihre Finger sehr exakt eingestellt werden müssen. Dies kann teilweise nur durch routiniertes Personal erfolgen, was die Flexibilität in einem Montagebetrieb reduziert.

Aufgabe der Erfindung ist es, eine Ring-Montagevorrichtung sowie ein Verfahren zum Einstellen einer Ring-Montagevorrichtung zu schaffen, mittels denen die Ring-Montagevorrichtung sehr schnell und vor allem sehr exakt für andere Ringe einjustiert werden kann.

Dies wird bei einer Ring-Montagevorrichtung der eingangs genannten Art dadurch gelöst, dass ein Breitenverstellmechanismus vorgesehen ist, mit einer Bahn, längs der die schwenkbaren Greiferarme aufeinander zu und voneinander weg beweglich sind, um den Abstand der Schwenkpunkte der Greiferarme zu verstellen und die Ring-Montagevorrichtung an verschiedene Ringquerschnitte anzupassen.

Der Breitenverstellmechanismus erlaubt ein sehr schnelles und präzises Umstellen der Ring-Montagevorrichtung auf andere Ringdurchmesser, denn die Bahn gibt die Bewegung der Greiferarme vor, und die Greiferarme müssen nicht mehr demontiert werden. Sie werden auf der physischen Bahn verfahren.

Diese Bahn kann insbesondere eine lineare Bahn sein, die üblicherweise in Frontansicht und bei parallel gestellten Fingern in rechtem Winkel zu den Fingern verläuft.

Die Bahn kann eine Führungsbahn, insbesondere eine Kulisse oder Schiene sein, an der die Haltekörper laufen, wobei die Haltekörper die Greiferarme tragen. Durch das Vorsehen der Haltekörper ist es möglich, die Greiferarme auswechselbar zu gestalten, für den Fall einer Reparatur oder des Anbaus eines komplett anderen, unter Umständen verbesserten oder geometrisch etwas anderen Greiferarms, der ebenfalls universell verwendbar ist.

Eine extrem sichere Verstellung in Breitenrichtung kann dadurch erfolgen, dass ein auswechselbarer Abstandshalter vorgesehen ist, der mechanisch die Haltekörper miteinander koppelt und sie in einem festen Abstand voneinander fixiert. Der auswechselbare Abstandshalter wirkt wie eine in der Montagevorrichtung verbaute, auswechselbare Einstelllehre.

Vorzugsweise sind die Finger, unabhängig von ihrem Abstand zueinander, stets gleichmäßig und symmetrisch von einer Symmetrieebene der Vorrichtung beabstandet.

Für jeden Ringquerschnitt kann es einen Abstandshalter geben.

Zum Breitenverstellen wird einfach der bisherige Abstandshalter schnell entfernt und gegen einen anderen Abstandshalter ausgetauscht, der dann die Greiferarme auf den optimalen Abstand bringt und sie auch in diesem Abstand hält. Dies wird durch die Fixierung des Abstandshalters zu den oder an den Haltekörpern erreicht.

Natürlich kann ein Abstandshalter auch unter Umständen für mehrere Querschnitte von Ringen eingesetzt werden, wenn er beispielsweise unterschiedliche klar voneinander abgegrenzte Abschnitte hat, die ein Ankoppeln an die Haltekörper mit unterschiedlichem Abstand ermöglichen.

Eine Variante der Erfindung sieht vor, dass der Abstandshalter einen lösbaren seitlichen Formschluss mit den Haltekörpern eingeht, um den Abstand zu fixieren. Dieser Formschluss sollte spielfrei sein.

Eine Variante, wie dieser Formschluss zu erreichen ist, besteht darin, dass über Vorsprünge, die in Ausnehmungen eingreifen, der Abstandshalter und die Haltekörper gekoppelt sind. Dabei können die Vorsprünge entweder im Abstandshalter oder im Haltekörper und umgekehrt die Ausnehmungen im Haltekörper oder im Abstandshalter vorgesehen sein.

Insbesondere ragen die Vorsprünge in Richtung der parallel gestellten Finger, sodass der Abstandshalter nur in dieser Richtung aufgesetzt oder abgezogen werden muss.

Wenn ein Abstandshalter zahlreiche Ausnehmungen hat, so können beispielsweise diese Ausnehmungen beschriftet sein, sodass für jede Ausnehmung ein bestimmter Ringquerschnitt steht. In diesem Fall wäre es, wie gesagt, möglich, einen Abstandshalter für unterschiedliche Ringdurchmesser zu verwenden.

Der Abstandshalter kann optional vom freien Ende der Finger in einer Richtung, die durch die Längsrichtung der parallel gestellten Finger definiert ist, an die Haltekörper angekoppelt werden, unter Schaffung eines seitlich wirkenden Formschlusses. Seitlich bedeutet in diesem Fall, der Formschluss wirkt in Richtung der Bahnlängserstreckung. Üblicherweise ist im Bereich unterhalb und hinter den Fingern Platz in der Ring-Montagevorrichtung, sodass in diesem Bereich auch die Möglichkeit vorhanden ist, den Abstandshalter einzusetzen und wieder zu entfernen.

Wie bereits erwähnt, ist die Ring-Montagevorrichtung optional mit mehreren Abstandshaltern ausgestattet, die einzeln an dieselbe Stelle der Haltekörper angekoppelt werden können und unterschiedliche Abstände der Greiferarme festlegen. Das bedeutet, die Ring-Montagevorrichtung umfasst einen Satz an Abstandshaltern, die dann zweckgerichtet in die eigentliche Vorrichtung eingesetzt werden, und zwar je nach zu montierender Ringgröße.

Die obige Aufgabe wird auch gelöst durch ein Verfahren der eingangs genannten Art, bei dem folgende Schritte angewandt werden:
seitliches, geführtes Verschieben der Greiferarme voneinander weg oder aufeinander zu auf einen vorgegebenen Soll-Abstand, und
Fixieren der Stellungen der Greiferarme auf den eingestellten Soll-Abstand.

Wie bereits zuvor erwähnt, kann dieses Einstellen und Fixieren durch Ankoppeln eines Abstandshalters an die Greiferarme tragenden Haltekörper erfolgen, und zwar nach dem seitlichen Verschieben und unter Schaffung eines seitlich wirkenden Formschlusses zwischen Abstandshalter und Haltekörpern.

Der Abstand der Greiferarme wird bei paralleler Stellung der Greiferarme gemessen oder kann bei schwenkbaren Greiferarmen durch den Abstand von deren Schwenkachsen gemessen werden.

Die Greiferarme und die Abstandshalter können unter Ausnutzung einer Einführschräge zwischen dem Abstandshalter und dem jeweiligen Greiferarm gekoppelt werden, zur Feinjustage des Abstandes. Diese Einführschrägen erlauben ein schnelles Ankoppeln und trotzdem eine exakte Ausrichtung des Abstandes.

Der Abstandshalter kann theoretisch in jeder Stellung der Finger an die Greiferarme angekoppelt werden, unter Bildung eines Formschlusses. Der Formschluss wirkt in seitlicher Richtung bezogen auf die Längserstreckung der Finger.

Eine weitere Variante der erfindungsgemäßen Ring-Montagevorrichtung und des erfindungsgemäßen Verfahrens sieht vor, dass die Breitenverstellung motorisch erfolgt. Das bedeutet, es ist ein eigener, insbesondere elektrischer Antrieb vorgesehen, der die Haltekörper längs der Bahn zueinander verschiebt. Es kann dabei in einer Steuerung eingegeben werden, welcher Abstand realisiert werden soll, gegebenenfalls unter Bezugnahme auf den Durchmesser des zu montierenden Ringes. Ein Motor kann beispielsweise mit einem selbsthemmenden Getriebe, z. B. einem Schneckengetriebe, versehen sein, sodass die Positionierung der Haltekörper nach Erreichen des richtigen Abstandes gesichert ist. Alternativ hierzu können Klemmvorrichtungen oder Bremsen vorgesehen sein, um die Lage nach der Einstellung zu fixieren. Diese Variante bezieht sich auf die erfindungsgemäße Ring-Montagevorrichtung und auf das erfindungsgemäße Verfahren.

Generell ist zu betonen, dass die obigen und nachfolgenden Merkmale sich auf die Ring-Montagevorrichtung und auch das Verfahren beziehen, so dass sie nicht nur ausschließlich im Zusammenhang mit entweder der Ring-Montagevorrichtung oder dem Verfahren offenbart sind.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Frontansicht eines Teils der erfindungsgemäßen Ring-Montagevorrichtung zur Durchführung des erfindungsgemäßen Verfahrens mit abgenommenem Außengehäuse,
- Figur 2 eine Frontansicht einer Baugruppe der erfindungsgemäßen Ring-Montagevorrichtung mit leicht gespreizten Fingern nach Aufnahme des Dichtrings und maximal ausgefahrenen Fingern,
- Figur 3 die Baugruppe nach Figur 2 mit etwas zurückgefahrenen Fingern,
- Figur 4 eine Axialansicht der Finger samt der Anschläge für den Ring,
- Figur 5 die Baugruppe nach Figur 2 mit auseinandergefahrenen und ausgefahrenen Fingern in der Zustellbewegung des mit dem Ring zu bestückenden Bauteils,
- Figur 6 eine Seitenansicht der Baugruppe nach Figur 1, und
- Figur 7 eine Detailansicht der Baugruppe nach Figur 2 im Bereich der Enden der Finger im gespreizten Zustand während des Montagevorgangs.

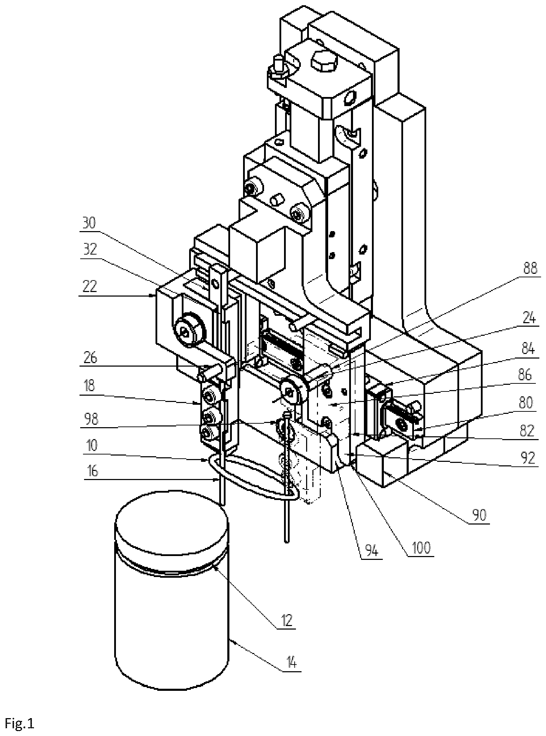

In Figur 1 ist eine Ring-Montagevorrichtung zum Aufbringen eines elastischen, geschlossen umlaufenden Rings 10 dargestellt, welcher ein sogenannter Dichtring, auch O-Ring genannt, ist.

Die Montagevorrichtung ist nicht komplett dargestellt, da nicht alle Antriebe zu sehen sind.

Die Ring-Montagevorrichtung dient dazu, den Ring 10 z.B. in eine Nut 12 eines Bauteils 14 einzubringen, ohne dass der Ring 10 tordiert oder leicht verdreht ist, sondern gleichmäßig gespannt in der Nut 12 sitzt.

Das Bauteil 14 kann ein endgültiges Bauteil (d.h. der Ring 10 bleibt dauerhaft auf dem Bauteil) oder ein temporär genutztes Bauteil in Form einer zylindrischen oder kegeligen Fügehülse sein. Das Bauteil 14 muss auch keine Nut aufweisen. Im Falle einer Fügehülse würde der Ring 10 von der Fügehülse auf das endgültige Bauteil aufgeschoben werden.

Die Ring-Montagevorrichtung umfasst dabei zwei Finger 16, welche in der dargestellten Variante, die nicht einschränkend zu verstehen ist, als sogenannte Nadeln ausgeführt sind. Die Konstruktion erlaubt es, die Finger 16 starr oder flexibel auszuführen.

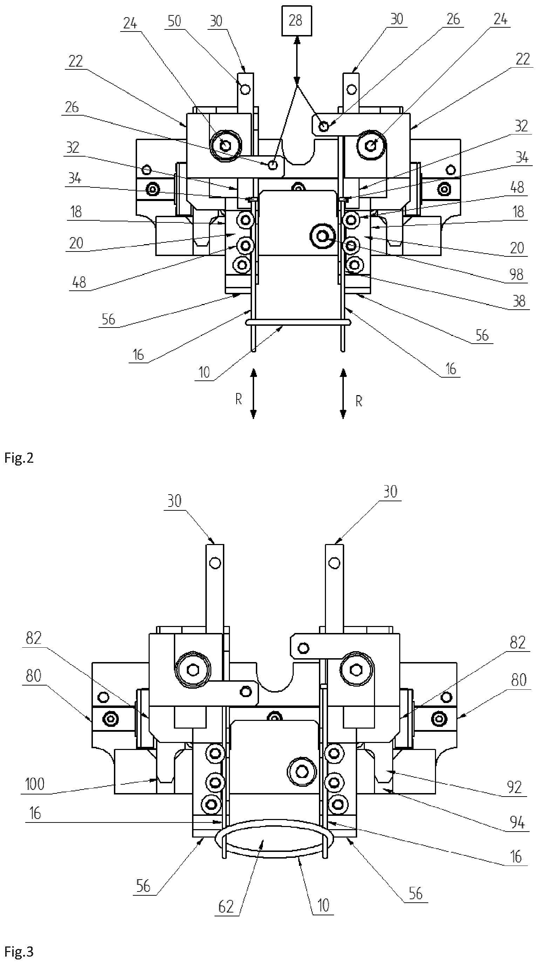

Die in Figur 2 gezeigten Finger 16 sitzen jeweils auf einem eigenen sogenannten Greiferarm 18, der mehrteilig ausgeführt ist, aber auch einteilig ausführbar ist. In der nicht einschränkend zu verstehenden gezeigten Ausführungsform umfasst jeder Greiferarm 18 einen zum Beispiel leistenförmigen Abschnitt 20 (siehe Figur 2), der an einem Schwenkarm 22 befestigt ist, wobei jeder Schwenkarm 22 um eine eigene Schwenkachse 24 schwenkbar ist. Die Schwenkachsen 24 bilden Schwenkpunkte der Greiferarme 18.

Die Schwenkarme 22 haben jeweils einen Hebelarm 26, mittels dem sie an einen stilisiert dargestellten Linearantrieb 28 gekoppelt sind. Durch Verstellung des Linearantriebs 28 werden die Schwenkarme 22 aufeinander zu und voneinander weg geschwenkt und damit auch die Finger 16. Die Greiferarme 18 umfassen somit zumindest die leistenförmigen Abschnitte 20, die Schwenkarme 22 und die Hebelarme 26.

Auf den Schwenkarmen 22 sitzen Schlitten 30, die in entsprechenden Linearführungen 32 auf jedem Schwenkarm 22 in Längserstreckungsrichtung R der Finger (Längsmittelachsen der Finger 16) verschieblich sind.

Die Finger 16 sind mit diesen Schlitten 30 in Längserstreckungsrichtung R formschlüssig gekoppelt.

Diese formschlüssige Koppelung kann beispielsweise dadurch erreicht werden, dass die Finger 16 einen verdickten Kopf 34 besitzen, der in eine entsprechend komplementäre Ausnehmung in dem jeweiligen Schlitten 30 eingesetzt werden kann.

Mit Verstellung der Schlitten 30 in Längserstreckungsrichtung R werden demnach auch die Finger 16 mitverstellt.

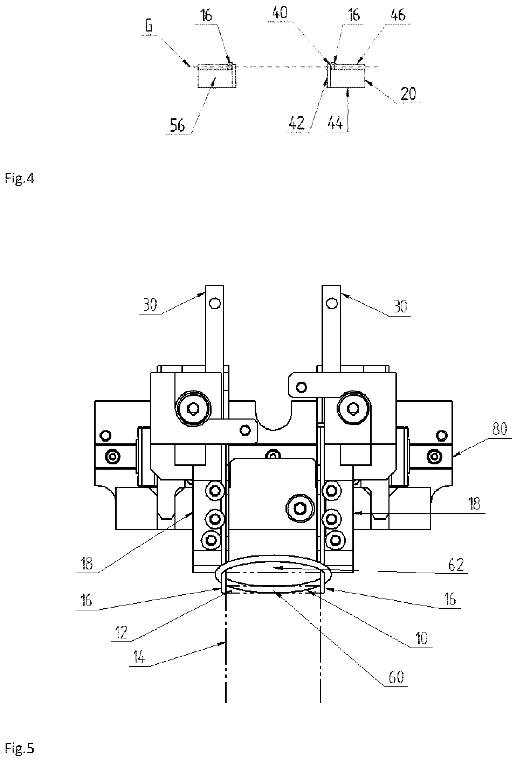

Zur Führung der Finger 16 in seitlicher Richtung haben die Greiferarme 18, hier die leistenförmigen Abschnitte 20 nahe an ihrem innenliegenden Rand 38, insbesondere im Bereich des Übergangs zur Vorderseite (in Figur 2 zu sehen) oder des Übergangs der Rückseite des Greiferarms 18 zum innenliegenden Rand 38 eine rinnenartige Aufnahmeführung 40, die in Figur 4 angedeutet ist. In Figur 4 sind auch der innenliegende Rand 42, die Rückseite 44 und die Vorderseite 46 zu erkennen.

Vorderseitig sind Halter 48, in Form von beispielsweise Schrauben vorgesehen, die ein Herausfallen der Finger 16 aus den Aufnahmeführungen 40 verhindern. Optional können die Schrauben natürlich auch eine Halteplatte am Greiferarm 18 vorderseitig befestigen, um die entsprechende Aufnahmeführung 40 für den zugeordneten Finger 16 zu schließen.

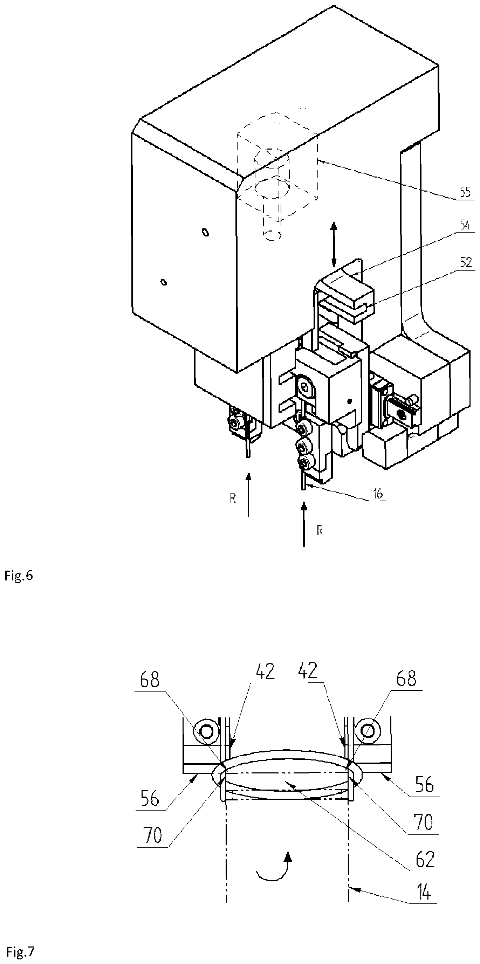

Die Schlitten 30 haben im Bereich ihres oberen Endes einen sogenannten Koppelabschnitt, z. B. einen Stift 50, mit dem sie in eine in Figur 6 dargestellte Kulisse 52 eines Kulissenbauteils 54 ragen.

In Figur 1 sind aus Gründen der Übersichtlichkeit nur der linke Schlitten 30 mit seinem Stift 50 dargestellt.

Die Kulisse 52, in die die Stifte 50 ragen, verläuft quer, insbesondere in Frontansicht im rechten Winkel zur Längserstreckungsrichtung R bei parallel ausgerichteten Fingern 16.

Das Kulissenbauteil 54 wird durch einen in Figur 6 stilisiert dargestellten Antrieb 55 auf und ab bewegt.

Durch diese Bewegung werden die Schlitten 30 in ihren Führungen 32 linear verschoben und damit die Finger 16 in Längserstreckungsrichtung R aufwärts oder abwärts relativ zu den Greiferarmen 18 bewegt.

Durch die Kulisse 52 ist es egal, in welcher Schwenkposition sich die Greiferarme 18 befinden, in jeder Stellung können die Finger 16 längsverstellt werden.

Die Greiferarme 18 haben jeweils einen Anschlag 56 (siehe Figur 2), hier beispielsweise an ihrer unteren Stirnseite. Dieser Anschlag 56 dient dem Kippen des Rings 10 vor der Montage des Ringes auf einem sogenannten Außenmantel 60 des Bauteils 14. In der dargestellten Variante, in der es eine Nut 12 gibt, bilden der Nutgrund und die Wände der Nut 12 den Außenmantel 60.

Nachfolgend wird das Verfahren zum Montieren des Rings erläutert.

Zuerst wird ein zuvor aus einer Menge von Ringen vereinzelter Ring 10 von den beiden aufeinander zu verschwenkten Fingern 16 aufgenommen.

Sobald die Finger 16 weit genug durch die vom Ring 10 umschlossene Fläche 62 (siehe Figur 2) eingedrungen sind, werden die Finger 16 voneinander weggeschwenkt durch Betätigen des Antriebs 28, sodass der Ring 10 etwas gespannt ist und aus seiner ursprünglich kreisrunden Form eine längliche, ovale Form wird. Je nach Elastizität des Rings 10 und der von den Fingern 16 aufgebrachten Kraft stehen die Finger 16 dann parallel oder sie laufen noch schräg aufeinander zu.

Die Anschläge 56 sind nicht vorder- und rückseitig per Finger 16 vorgesehen, sondern liegen gemäß der Axialansicht in Figur 4 auf einer Seite (hier der unteren Seite einer Geraden G, die die Finger schneidet, insbesondere durch die Mittelpunkte der Finger 16 geht.

Beim Zurückschieben der Finger 16 samt Ring 10 stößt die, bezogen auf Figur 3 hintere Hälfte des Rings 10 gegen die Anschläge 56. Nachdem die Finger 16 aber weiter zurückgezogen werden, bleibt die hintere Hälfte an den Anschlägen 56 positioniert, sodass die vordere Hälfte nach oben kippt, wie dies in Figur 3 gezeigt ist. In Frontansicht gemäß Figur 3 liegt die vom Ring 10 umschriebene ebene Fläche 62 deshalb gekippt zu der Zeichenebene und damit der durch die Finger 16 definierten Ebene.

Wird dann das Bauteil 14 seitlich mit seiner Mantelfläche in Richtung Ring 10 und Finger 16 gefahren, können die Finger 16 dann, wenn sie einen kleineren Abstand als der Durchmesser des Bauteils 14 haben, durch das Bauteil 14 oder eine eventuell vorhandene Kulissenbahn, in die die Finger 16 mit Ihren Enden einfahren, auseinanderbewegt werden. Das obere Ende des Bauteils 14 dringt dann in den schräg stehenden Ring 10 ein. Bei diesem Auseinanderdrücken der Finger 16 können optional auch die Greiferarme 18, wenn sie schwenkbar federnd gelagert sind, nach außen verschwenken.

Ist der Ring 10 elastisch genug und ist die Kraft der Finger 16 groß genug, um die Finger 16 so weit voneinander weg zu bewegen, dass ihr Abstand größer als der Durchmesser des Bauteils 14 ist, müssen die Finger 16 nicht mehr durch das Bauteil 14 oder eine Kulisse voneinander weg geschwenkt werden.

Bezogen auf die Frontansicht ist der Ring 10 wie gesagt offen, sodass von vorne das Bauteil in diesen offenen Ring 10 senkrecht zur Zeichenebene eingefahren werden könnte.

Vorzugsweise erfolgt diese Bewegung des Bauteils 14 relativ zum Ring 10, aber in diesem Fall nicht senkrecht und in einer linearen Richtung, vielmehr wird das Bauteil 14 relativ zu den Fingern 16 längs einer Kurvenbahn in die vom Ring 10 umschlossene Fläche 62 bewegt. Eine lineare oder senkrechte Bewegung des Bauteils wird von dieser Erfindung jedoch mit umfasst.

Diese Kurvenbahn verläuft, bezogen auf Figur 3, von vorderhalb der Zeichenebene von vorne unten längs der Kurve nach oben und nach hinten in die Zeichenebene hinein.

Die Bewegung ist dabei so ausgerichtet und die Kurvenbahn so gelegt, dass das unterste Ende des Rings 10 sofort in die Nut 12 eindringt, wenn das Bauteil 14 erstmals den Ring 10 kontaktiert (siehe Figur 5).

Ist dann das Bauteil 14 komplett im Ring 10 aufgenommen, können die Finger 16 komplett zurückgefahren werden.

Ein wichtiges Detail im Bereich der Anschläge 56 und der innenseitigen Ränder 42 ist in Figur 7 gezeigt. Damit das Bauteil 14 möglichst dicht an die einander zugewandten Innenseiten der Finger 16 herangeführt werden kann und möglichst in Längserstreckungsrichtung R (hier auch Axialrichtung des Bauteils 14) weit oben zwischen die Finger 16 bewegt werden kann, sind die Greiferarme 18 angrenzend an den jeweiligen Anschlag 56 innenseitig mit einer Aussparung 68 versehen, in die dann das obere stirnseitige Ende des Bauteils 14 eindringen kann, wenn es durch die Fläche 62 durchgeschwenkt wird. Diese Aussparung 68 reicht bis zur Innenseite 70 der Finger, sodass in diesem Bereich keine oder keine komplette Aufnahmeführung 40 ausgebildet ist.

Die dargestellte Ring-Montagevorrichtung weist darüber hinaus einen sogenannten Breitenverstellmechanismus auf, der nicht zwingend auf die vorgenannte Konstruktion mit längsverschiebbaren Fingern beschränkt ist und auch bei unverschieblichen, starr an den Greiferarmen 18 angebrachten oder mit diesen zu einem Bauteil verschmolzenen Fingern eingesetzt werden kann. Dieser Breitenverstellmechanismus dient dazu, die Ring-Montagevorrichtung ohne großen Umbau, vor allem mit denselben Greiferarmen 18 und Fingern 16, auch für unterschiedlich große, d. h. im Querschnitt unterschiedliche Ringe 10 einsetzen zu können.

Der Breitenverstellmechanismus sieht, ganz allgemein gesagt, vor, dass die Schwenkpunkte, d. h. die Schwenkachsen 24 der Greiferarme 18 aufeinander zu und voneinander weg beweglich sind, womit der Abstand der Greiferarme 18 und damit der Finger 16 variabel sind.

Die Schwenkpunkte, d. h. die Schwenkachsen 24, können längs einer linearen Bahn 80 verfahren werden, siehe Figur 3.

Diese Bahn 80 ist eine Führungsbahn in Form einer Kulisse oder einer Schiene, an der sogenannte Haltekörper 82 entlanglaufen können. Diese Haltekörper 82, siehe auch Figur 1, rechte Hälfte, können mehrstückig ausgebildet sein.

In Figur 1 ist zu sehen, dass gemäß diesem Beispiel die Bahn 80 eine Linearführung ist, auf der ein Wagen 84 für jeden Greiferarm 18 vorhanden ist. Auf dem Wagen 84 sitzt ein Zwischenelement 86, das zusammen mit dem Wagen 84 den Haltekörper 82 bildet. An dem Haltekörper 82 ist dann über einen Führungsbolzen 88 der Greiferarm 18 angebracht. Der Führungsbolzen 88 bildet dann die Schwenkachse 24.

Um für die jeweiligen Größen der Ringe 10 eine schnelle Adaption der Abstände der Greiferarme 18 ohne aufwendige Einstellungen durch Personal zu erreichen, sind verschiedene Abstandshalter 90 vorgesehen. Jede Größe von Ring 10 hat seinen eigenen Abstandshalter 90.

Dieser Abstandshalter 90 koppelt die Haltekörper 82 mechanisch fest miteinander und fixiert ihren Abstand zueinander. Dabei hat jeder Haltekörper 82 einen abstehenden Vorsprung 92, der sich in Längserstreckungsrichtung R erstreckt und in eine Ausnehmung 94 in Abstandshalter 90 hineinragt. Quer zur Längserstreckungsrichtung R ergibt sich zwischen Haltekörpern 82 und Abstandshalter 90 ein spielfreier mechanischer Formschluss in Richtung der Längserstreckung der Bahn 80.

Der Abstand der beiden Ausnehmungen 94 ist somit immer auf den Durchmesser des Rings 10 abgestimmt.

Die verschiedenen Abstandshalter 90 können in die Ring-Montagevorrichtung einfach von unten aus entfernt oder eingesetzt werden, nachdem entsprechende Befestigungsmittel 98 gelöst werden. Dann kann der Abstandshalter 90 einfach nach unten abgezogen werden, und ein neuer Abstandshalter 90 wird von unten eingesetzt, wobei die Haltekörper 82 soweit aufeinander zu oder voneinander weggefahren werden, dass die Vorsprünge 92 in die Ausnehmungen 94 eindringen können.

Einführschrägen 100 am freien Ende der Vorsprünge 92 erleichtern dieses Einsetzen der Abstandshalter 90 und führen zu einer Feinjustage des Abstandes.

Diese Ankoppelung der jeweiligen Abstandshalter 90 an die Ring-Montagevorrichtung erfolgt vorzugsweise bei paralleler Stellung der Finger 16. Durch die Abstandshalter 90 werden sozusagen die Haltekörper 82 mechanisch in Richtung der Bahn 80 fest miteinander gekoppelt und mit einem festen Abstand zueinander fixiert.

Die Koppelung kann natürlich auch umgekehrt dadurch erfolgen, dass am Abstandshalter 90 ein Vorsprung vorgesehen ist, der in eine komplementäre Ausnehmung im Haltekörper 82 eindringt.

## Patentansprüche

1. Ring-Montagevorrichtung zum Aufbringen eines elastischen, geschlossen umlaufenden Rings (10), insbesondere eines Dichtrings, auf einen Außenmantel (60) eines Bauteils (14), mit wenigstens zwei aufeinander zu und voneinander weg um Schwenkpunkte (24) schwenkbaren Greiferarmen (18), wobei auf jedem Greiferarm (18) ein Finger (16) angebracht ist, und die Finger (16) in eine vom Ring (10) umschlossene Fläche (62) eindringen können und durch das Schwenken der Greiferarme (18) voneinander weg und nach außen beweglich sind, um den Ring (10) zu spannen,
**dadurch gekennzeichnet, dass** ein Breitenverstellmechanismus vorgesehen ist, mit einer Bahn (80), längs der die schwenkbaren Greiferarme (18) aufeinander zu und voneinander weg beweglich sind, um den Abstand der Schwenkpunkte (24) der Greiferarme (18) zu verstellen und die Ring-Montagevorrichtung an verschiedene Ringquerschnitte anzupassen.

2. Ring-Montagevorrichtung nach Anspruch 1, **dadurch gekennzeichnet, dass** die Bahn (80) eine lineare Bahn (80) ist.

3. Ring-Montagevorrichtung nach Anspruch 1 oder 2, **dadurch gekennzeichnet, dass** die Bahn (80) eine Führungsbahn, insbesondere eine Kulisse oder eine Schiene ist, an der Haltekörper (82) laufen, wobei die Haltekörper (82) die Greiferarme (18) tragen.

4. Ring-Montagevorrichtung nach Anspruch 3, **dadurch gekennzeichnet, dass** ein auswechselbarer Abstandshalter (90) vorgesehen ist, der mechanisch die Haltekörper (82) miteinander koppelt und einen festen Abstand zwischen diesen fixiert.

5. Ring-Montagevorrichtung nach Anspruch 4, **dadurch gekennzeichnet, dass** der Abstandshalter (90) einen lösbaren seitlichen Formschluss mit den Haltekörpern (82) eingeht, um den Abstand zu fixieren.

6. Ring-Montagevorrichtung nach Anspruch 5, **dadurch gekennzeichnet, dass** über Vorsprünge (92), die in Ausnehmungen (94) eingreifen, der Abstandshalter (90) und die Haltekörper (82) gekoppelt sind.

7. Ring-Montagevorrichtung nach einem der Ansprüche 4 bis 6, **dadurch gekennzeichnet, dass** der Abstandshalter (90) vom freien Ende der Finger (16) in einer Richtung, die durch die Längsrichtung der parallel gestellten Finger (16) definiert ist, an die Haltekörper (82) ankoppelbar ist, unter Schaffung eines seitlich wirkenden Formschlusses.

8. Ring-Montagevorrichtung nach einem der Ansprüche 4 bis 7, **dadurch gekennzeichnet, dass** mehrere Abstandshalter (90) vorgesehen sind, die an dieselbe Stelle der Haltekörper (82) angekoppelt werden können und unterschiedliche Abstände der Greiferarme (18) festlegen.

9. Verfahren zum Einstellen einer Ring-Montagevorrichtung auf geschlossen umlaufende Ringe (10) von unterschiedlichen Querschnitten, wobei die Ring-Montagevorrichtung mehrere aufeinander zu und voneinander weg um Schwenkpunkte (24) schwenkbare Greiferarme (18) und auf jedem Greiferarm (18) einen dort angebrachten Finger (16) aufweist, wobei zwischen den Fingern der zu montierende Ring (10) gespannt werden kann, **gekennzeichnet durch** folgende Schritte:
seitliches, geführtes Verschieben der Greiferarme (18) und Schwenkpunkte (24) voneinander weg oder aufeinander zu auf einen vorgegebenen Soll-Abstand, und
Fixieren der Stellungen der Greiferarme (18) auf den eingestellten Soll-Abstand.

10. Verfahren nach Anspruch 9, **gekennzeichnet durch** folgenden Schritt:
Ankoppeln eines Abstandshalters an die Greiferarme (18) tragenden Haltekörper (82) nach dem seitlichen Verschieben unter Schaffung eines seitlich wirkenden Formschlusses zwischen Abstandshalter (90) und Haltekörpern.

11. Verfahren nach Anspruch 10, **gekennzeichnet durch** folgenden Schritt:
Koppeln von Greiferarmen (18) und Abstandshalter (90) unter Ausnutzung einer Einführschräge zwischen dem Abstandshalter (90) und dem jeweiligen Greiferarm (18) zur Feinjustage des Abstandes.

12. Verfahren nach einem der Ansprüche 10 und 11, **dadurch gekennzeichnet, dass** der Abstandshalter (90) in einer parallelen Stellung der Finger (16) in deren Längsrichtung an die Greiferarme (18) angekoppelt wird, unter Bildung eines Formschlusses, der in seitlicher Richtung wirkt.

## Claims

1. A ring mounting device for applying an elastic, circumferentially closed ring (10), in particular a sealing ring, onto an outer jacket (60) of a component (14), comprising
at least two gripper arms (18) adapted to be pivoted towards and away from each other about pivot points (24), each gripper arm (18) having a finger (16) mounted thereon and the fingers (16) being adapted to enter into a surface area (62) enclosed by the ring (10) and to be moved away from each other and outwards by the pivoting of the gripper arms (18) in order to tension the ring (10),
**characterized in that** a width adjustment mechanism is provided which has a path (80) along which the pivotable gripper arms (18) are movable towards and away from each other to adjust the distance of the pivot points (24) of the gripper arms (18) and to adapt the ring mounting device to different ring cross-sections.

2. The ring mounting device according to claim 1, **characterized in that** the path (80) is a linear path (80).

3. The ring mounting device according to claim 1 or 2, **characterized in that** the path (80) is a guideway, in particular a slotted link or a rail, on which holding bodies (82) run, the holding bodies (82) carrying the gripper arms (18).

4. The ring mounting device according to claim 3, **characterized in that** an exchangeable spacer (90) is provided which mechanically couples the holding bodies (82) to each other and fixes a fixed distance between them.

5. The ring mounting device according to claim 4, **characterized in that** the spacer (90) establishes a releasable lateral form fit with the holding bodies (82) in order to fix the distance.

6. The ring mounting device according to claim 5, **characterized in that** the spacer (90) and the holding bodies (82) are coupled by means of projections (92) that engage in recesses (94).

7. The ring mounting device according to any of claims 4 to 6, **characterized in that** the spacer (90) is adapted to be coupled to the holding bodies (82) from the free end of the fingers (16) in a direction defined by the longitudinal direction of the fingers (16) placed in parallel, providing a laterally acting form fit.

8. The ring mounting device according to any of claims 4 to 7, **characterized in that** a plurality of spacers (90) are provided which can be coupled to the same point of the holding bodies (82) and define different distances of the gripper arms (18).

9. A method of adjusting a ring mounting device to circumferentially closed rings (10) of different cross-sections, the ring mounting device having a plurality of gripper arms (18) adapted to be pivoted towards and away from each other about pivot points (24) and, on each gripper arm (18), a finger (16) mounted there, the ring (10) to be mounted being adapted to be tensioned between the fingers, **characterized by** the following steps:
lateral, guided displacement of the gripper arms (18) and pivot points (24) away from or towards each other to a predefined desired distance; and
fixing the positions of the gripper arms (18) to the set desired distance.

10. The method according to claim 9, **characterized by** the following step:
coupling a spacer to the holding bodies (82) carrying gripper arms (18) after the lateral displacement, providing a laterally acting form fit between the spacer (90) and the holding bodies.

11. The method according to claim 10, **characterized by** the following step:
coupling gripper arms (18) and spacer (90) utilizing an insertion slope between the spacer (90) and the respective gripper arm (18) for fine adjustment of the distance.

12. The method according to either of claims 10 and 11, **characterized in that** the spacer (90) is coupled to the gripper arms (18) in a parallel position of the fingers (16) in the longitudinal direction thereof, forming a form fit acting in a lateral direction.

## Revendications

1. Dispositif de montage d'anneau pour l'application d'un anneau élastique fermé circonférentiel (10), en particulier d'un anneau d'étanchéité sur une enveloppe extérieure (60) d'un composant (14), comprenant
au moins deux bras de préhension (18) qui sont aptes à être pivotés les uns vers les autres et en éloignement les uns des autres autour de points de pivotement (24), un doigt (16) étant monté sur chaque bras de préhension (18), et les doigts (16) étant aptes à pénétrer dans une face (62) renfermée par l'anneau (10) et étant mobiles en éloignement les uns des autres et vers l'extérieur par le pivotement des bras de préhension (18) pour tendre l'anneau (10),
**caractérisé en ce qu'**il est prévu un mécanisme de réglage de largeur qui comprend une voie (80) le long de laquelle les bras de préhension pivotants (18) sont aptes à être déplacés les uns vers les autres et en éloignement les uns des autres pour régler la distance des points de pivotement (24) des bras de préhension (18) et adapter le dispositif de montage d'anneau à différentes sections transversales d'anneau.

2. Dispositif de montage d'anneau selon la revendication 1, **caractérisé en ce que** la voie (80) est une voie linéaire (80).

3. Dispositif de montage d'anneau selon la revendication 1 ou 2, **caractérisé en ce que** la voie (80) est une voie de guidage, en particulier une coulisse ou un rail sur laquelle/lequel des corps de retenue (82) se déplacent, les corps de retenue (82) portant les bras de préhension (18).

4. Dispositif de montage d'anneau selon la revendication 3, **caractérisé en ce qu'**il est prévu une pièce d'écartement échangeable (90) qui couple les corps de retenue (82) mécaniquement les uns aux autres et fixe une distance fixe entre ceux-ci.

5. Dispositif de montage d'anneau selon la revendication 4, **caractérisé en ce que** la pièce d'écartement (90) établit une liaison par coopération de formes latérale détachable avec les corps de retenue (82) pour fixer la distance.

6. Dispositif de montage d'anneau selon la revendication 5, **caractérisé en ce que** la pièce d'écartement (90) et les corps de retenue (82) sont couplés par des saillies (92) qui s'engagent dans des évidements (94).

7. Dispositif de montage d'anneau selon l'une des revendications 4 à 6, **caractérisé en ce que** la pièce d'écartement (90) est apte à être couplée aux corps de retenue (82) à partir de l'extrémité libre des doigts (16) dans un sens défini par le sens longitudinal des doigts (16) agencés en parallèle, formant ainsi une liaison par coopération de formes à effet latéral.

8. Dispositif de montage d'anneau selon l'une des revendications 4 à 7, **caractérisé en ce qu'**il est prévu une pluralité de pièces d'écartement (90) qui sont aptes à être couplées au même endroit des corps de retenue (82) et déterminent différentes distances des bras de préhension (18).

9. Procédé d'ajustage d'un dispositif de montage d'anneau à des anneaux fermés circonférentiels (10) présentant différentes sections transversales, le dispositif de montage d'anneau présentant une pluralité de bras de préhension (18) aptes à être pivotés les uns vers les autres et en éloignement les uns des autres autour de points de pivotement (24) et sur chaque bras de préhension (18) un doigt (16) monté là, l'anneau (10) à monter étant apte à être tendu entre les doigts, **caractérisé par** les étapes suivantes :
déplacement latéral guidé des bras de préhension (18) et des points de pivotement (24) en éloignement les uns des autres ou les uns vers les autres à une distance de consigne prédéterminée, et
fixation des positions des bras de préhension (18) à la distance de consigne réglée.

10. Procédé selon la revendication 9, **caractérisé par** l'étape suivante :
couplage d'une pièce d'écartement à des corps de retenue (82) portant les bras préhension (18) après le déplacement latéral en formant une liaison par coopération de formes à effet latéral entre la pièce d'écartement (90) et les corps de retenue.

11. Procédé selon la revendication 10, **caractérisé par** l'étape suivante :
couplage des bras de préhension (18) et de la pièce d'écartement (90) en utilisant une pente d'insertion entre la pièce d'écartement (90) et le bras de préhension (18) respectif pour un ajustage avec précision de la distance.

12. Procédé selon l'une des revendications 10 et 11, **caractérisé en ce que** la pièce d'écartement (90) est couplée aux bras de préhension (18) dans une position parallèle des doigts (16) dans leur sens longitudinal, formant ainsi une liaison par coopération de formes à effet latéral.
